# EUROPÄISCHE PATENTANMELDUNG

(11) **EP 2 105 191 A1**
(43) Veröffentlichungstag der Anmeldung: **30.09.2009**
(21) Anmeldenummer: 08005850.6
(22) Anmeldetag: 27.03.2008
(51) Int. Cl.: B01D 53/14, B01D 53/62, C01B 31/20

(54) **Verfahren und Vorrichtung zum Abtrennen von Kohlendioxid aus einem Abgas einer fossilbefeuerten Kraftwerksanlage**

(71) Anmelder: SIEMENS AKTIENGESELLSCHAFT, 80333 München (DE)
(72) Erfinder: Rost, Mike, 91058 Erlangen (DE); Schneider, Rüdiger, Dr., 65817 Eppstein (DE); Schramm, Henning, Dr., 60598 Frankfurt (DE)

(57) **Zusammenfassung**

Die Erfindung betrifft ein Verfahren zum Abtrennen von Kohlendioxid aus einem Abgas einer fossilbefeuerten Kraftwerksanlage, bei dem in einem Verbrennungsprozess (1) ein fossiler Brennstoff verbrannt wird, wobei ein kohlendioxidhaltiges Abgas (2) erzeugt wird, bei dem in einem Absorptionsprozess (4) kohlendioxidhaltiges Abgas (2) mit einem Absorptionsmedium in Kontakt gebracht wird, wobei Kohlendioxid von dem Absorptionsmedium aufgenommen wird, bei dem in einem Desorptionsprozess (5) bei wenigstens einer ersten Prozess-Stufe von dem beladenen Absorptionsmedium (7) Kohlendioxid (11) abgegeben wird, wobei ein teilregeneriertes Absorptionsmedium (15) gebildet wird, und bei dem in dem Desorptionsprozess (5) bei wenigstens der ersten Stufe teilregeneriertes Absorptionsmedium (15) entnommen und in den Absorptionsprozess (4) zurückgeführt wird.

## Beschreibung

Die Erfindung betrifft ein Verfahren zum Betreiben einer fossilbefeuerten Kraftwerksanlage und insbesondere ein Verfahren zum Abtrennen von Kohlendioxid aus einem Abgas einer fossilbefeuerten Kraftwerksanlage. Die Erfindung betrifft außerdem eine fossilbefeuerte Kraftwerksanlage mit einer Abscheidevorrichtung zum Abtrennen von Kohlendioxid aus einem Abgas.

Bei fossilbefeuerten Kraftwerksanlagen zur Erzeugung elektrischer Energie in großtechnischem Maßstab entsteht durch die Verbrennung eines fossilen Brennstoffes ein kohlendioxidhaltiges Abgas. Neben Kohlendioxid enthält das Abgas weitere Verbrennungsprodukte wie z.B. die Gase Stickstoff, Schwefeldioxid, Stickstoffoxid und Wasserdampf sowie Festkörperpartikel, Stäube und Ruß. Das Abgas wird nach einer weitgehenden Abscheidung der Festkörperbestandteile in die Atmosphäre entlassen. Das sich in der Atmosphäre ansammelnde Kohlendioxid behindert die Wärmeabstrahlung unserer Erde und begünstigt durch den so genannten Treibhauseffekt eine Erhöhung der Erdoberflächentemperatur. Um eine Reduzierung der Kohlendioxid-Emission bei fossilbefeuerten Kraftwerksanlagen zu erreichen, kann Kohlendioxid aus dem Abgas abgetrennt werden.

Zur Abtrennung von Kohlendioxid aus einem Gasgemisch sind insbesondere aus der chemischen Industrie verschiedene Methoden bekannt. Insbesondere zum Abtrennen von Kohlendioxid aus einem Abgas nach einem Verbrennungsprozess (Post-combustion CO₂ separation) ist die Methode der ,Absorption-Desorption' oder der ,Tieftemperaturabscheidung (Cryogenic)' bekannt.

In großtechnischem Maßstab wird das beschriebene Abtrennen von Kohlendioxid mit dem Absorptions-Desorptionsverfahren mit einem Waschmittel durchgeführt. In einem klassischen Absorptions-Desorptions-Prozess wird das Abgas in einer Absorptionskolonne mit einem selektiven Lösungsmittel als Waschmittel in Kontakt gebracht. Dabei erfolgt die Aufnahme von Kohlendioxid durch einen chemischen oder physikalischen Prozess. Das gereinigte Abgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas- Dampfgemisch aus gasförmigem Kohlendioxid und verdampften Lösungsmittel ausgetrieben. Das verdampfte Lösungsmittel wird anschließend von dem gasförmigen Kohlendioxid separiert. Das Kohlendioxid kann nun in mehreren Stufen verdichtet, gekühlt und verflüssigt werden. In flüssigem oder gefrorenem Zustand kann das Kohlendioxid dann einer Lagerung oder Verwertung zugeführt werden. Das regenerierte Lösungsmittel wird zur Absorberkolonne zurück geleitet, wo es wieder Kohlendioxid aus dem kohlendioxidhaltigen Abgas aufnehmen kann.

Das Hauptproblem bei den existierenden Verfahren zum Abtrennen von Kohlendioxid aus einem Gasgemisch ist insbesondere der sehr hohe Energieaufwand, der in Form von Heizenergie für die Desorption benötigt wird. Um diesem Problem entgegen zu wirken, sind aus dem Stand der Technik eine Reihe von Vorschlägen bekannt.

So beschreibt die DE 299 24 190 U1 die Zusammenführung von Lösungsmitteln unterschiedlicher Regenerierungsgrade und Rückführung in den Absorber. Dazu weist die vorgeschlagene Wiederaufbereitungsanlage zur Wiedergewinnung einer gasförmigen Komponente aus einem Prozessgas einen Absorber auf, der ein dünnes Lösungsmittel und ein halbdünnes Lösungsmittel benutzt, welche die gasförmige Komponente aus dem Prozessgas absorbiert, wodurch ein angereichertes Lösungsmittel, ein halb angereichertes Lösungsmittel und dünnes Prozessgas erzeugt wird. Ein Regenerator ist an den Absorber gekuppelt, worin der Regenerator die gasförmige Komponente aus dem angereicherten Lösungsmittel entfernt, wodurch das dünne Lösungsmittel und das halbdünne Lösungsmittel wiedergewonnen werden. Ein Element für Kontrolle des Lösungsmittelflusses ist an den Absorber gekoppelt und kombiniert mindestens einen Teil des halb angereicherten Lösungsmittels mit zumindest einem Teil des halbdünnen Lösungsmittels, um ein Gemischtes Lösungsmittel zu bilden. Ein Kühler ist an den Absorber gekoppelt, der das gemischte Lösungsmittel kühlt. Das gekühlte Lösungsmittel wird anschließend durch ein verbindendes Element in den Absorber geführt. Durch diesen Prozess soll Energie zum regenerieren des Lösungsmittels eingespart werden können. Jedoch ist bei Integration der vorgeschlagenen Wiederaufbereitungsanlage in eine fossilbefeuerte Kraftwerksanlage, lediglich mit einer relativ geringen Verbesserung der Effizienz der Kraftwerksanlage zu rechnen, da die Wärmeenergie zum Betreiben des Regenerators nach wie vor aus dem Heißdampf des Kraftwerksprozesses entnommen werden muss, was den Wirkungsgrad der Kraftwerksanlage signifikant schmälert.

Genereller Nachteil an bekannten Abtrennverfahren für Kohlendioxid aus einem Abgas, die in oder nach einen Kraftwerksprozess geschaltet sind, ist insbesondere der signifikante Wirkungsgrad verschlechternde Einfluss der Abtrennverfahren auf den Kraftwerksprozess. Zu dieser Wirkungsgradverschlechterung kommt es, da die Energie zur Durchführung des Abtrennverfahrens aus dem Kraftwerksprozess entnommen werden muss. Die Wirtschaftlichkeit einer fossilbefeuerten Kraftwerksanlage mit Kohlendioxid-Abtrennungsvorrichtung ist daher deutlich geringer als ohne Kohlendioxid-Abtrennungsvorrichtung.

Eine Aufgabe der Erfindung besteht darin, ein Verfahren zum Abtrennen von Kohlendioxid aus einem Abgas einer fossilbefeuerten Kraftwerksanlage vorzuschlagen, das eine hohe Abscheideeffizienz bei zugleich günstigem Gesamtanlagenwirkungsgrad des Kraftwerksprozesses ermöglicht.

Eine weitere Aufgabe der Erfindung ist es, eine fossilbefeuerte Kraftwerksanlage mit integrierter Abscheidevorrichtung für Kohlendioxid vorzuschlagen, welche eine hohe Abscheideeffizienz bei zugleich günstigem Gesamtwirkungsgrad der Kraftwerksanlage ermöglicht.

Die auf ein Verfahren gerichtete Aufgabe ist erfindungsgemäß gelöst mit einem Verfahren zum Abtrennen von Kohlendioxid aus einem Abgas einer fossilbefeuerten Kraftwerksanlage, bei dem in einem Verbrennungsprozess ein fossiler Brennstoff verbrannt wird, wobei ein kohlendioxidhaltiges Abgas erzeugt wird, bei dem in einem Absorptionsprozess kohlendioxidhaltiges Abgas mit einem Absorptionsmedium in Kontakt gebracht wird, wobei Kohlendioxid von dem Absorptionsmedium aufgenommen wird, bei dem in einem Desorptionsprozess bei wenigstens einer ersten Prozess-Stufe von dem beladenen Absorptionsmedium Kohlendioxid abgegeben wird, wobei ein teilregeneriertes Absorptionsmedium gebildet wird, und bei dem in dem Desorptionsprozess bei wenigstens der ersten Stufe teilregeneriertes Absorptionsmedium entnommen und in den Absorptionsprozess zurückgeführt wird.

Die Erfindung geht dabei von der Überlegung aus, dass nur ein Teil des beladenen Absorptionsmediums weitgehend regeneriert wird. Ein anderer Teil wird dem Absorptionsprozess teilregeneriert zurückgeführt.

In den Absorptionsprozess wird zunächst das kohlendioxidbeladene Abgas und ein weitgehend von Kohlendioxid freies Absorptionsmedium in jeweils entgegenströmender Richtung eingeführt. Dadurch entsteht in dem Absorptionsprozess ein Konzentrations-Stoffgradient an Kohlendioxid. Bei der Einleitung des kohlendioxidhaltigen Abgases hat dieses einen hohen Gehalt an Kohlendioxid. Das Absorptionsmedium ist bei Einleitung weitgehend frei von Kohlendioxid. Bei der Durchleitung des kohlendioxidhaltigen Abgases durch den Absorptionsprozess wird Kohlendioxid kontinuierlich an das Absorptionsmedium abgegeben. Bei der Ausleitung des Absorptionsmediums hat dieses weitgehend das Kohlendioxid des Abgases aufgenommen. Zur Wiederverwendung muss das beladene Absorptionsmedium regeneriert werden. Dies geschieht in dem Desorptionsprozess.

In der ersten Prozess-Stufe des Desorptionsprozesses wird das beladene Absorptionsmedium zunächst vorregeneriert. Durch die Vorregenerierung wird Kohlendioxid von dem beladenen Absorptionsmedium abgegeben, wobei ein teilregeneriertes Absorptionsmedium gebildet wird. Der Kohlendioxidgehalt des teilregenerierten Absorptionsmediums ist demnach geringer als der Kohlendioxidgehalt des beladenen Absorptionsmediums. Ein Teil des teilregenerierten Absorptionsmediums wird dem Desorptionsprozess nun entzogen und in den Absorptionsprozess zurückgeführt. Das in dem Desorptionsprozess verbleibende teilregenerierte Absorptionsmedium wird in einer der ersten Prozess-Stufe folgenden, zweiten Prozess-Stufe, regeneriert. Durch die Regenerierung wird Kohlendioxid von dem teilregenerierten Absorptionsmedium abgegeben, wobei ein weitgehend von Kohlendioxid befreites regeneriertes Absorptionsmedium gebildet wird. Das regenerierte Absorptionsmedium kann nun wieder dem Absorptionsprozess zugeführt werden. Durch die Rückführung des Absorptionsmediums in den Absorptionsprozess wird das Absorptionsmedium zwischen dem Absorptionsprozess und dem Desorptionsprozess in einem Kreislauf geführt.

Durch die von der Erfindung vorgeschlagene Entnahme von teilbeladenem Absorptionsmedium wird der Desorptionsprozess entlastet, wodurch Energie zum Betreiben des Desorptionsprozesses eingespart wird. Das entnommene teilregenerierte Absorptionsmedium wird dem Absorptionsprozess an einer Prozess-Stufe zugeführt, an der kein absolut regeneriertes Absorptionsmedium notwendig ist. Dies ist in Prozess-Stufen möglich, an denen der Gehalt an Kohlendioxid im teilregenerierten Absorptionsmedium geringer ist als der Gehalt an Kohlendioxid im Abgas. Dies ermöglicht einen deutlich effizienteren Betrieb einer Kohlendioxid-Abscheidevorrichtung, insbesondere bei einer Kraftwerksanlage, die gegenüber einer herkömmlichen Betriebsweise in der Energieausnutzung verbessert ist.

Als fossile Brennstoffe sind dabei Gase wie z.B. Erdgas (Methan, Ethan, Propan, Butan, Ethen), Feststoffe wie z.B. Braun- oder Steinkohle und Flüssigkeiten wie z.B. Erdöl geeignet.

Die Energie zum Betreiben der Kohlendioxid-Abscheidevorrichtung einer fossilbefeuerten Kraftwerksanlage wird in der Regel durch Dampf bereit gestellt, der z.B. aus dem Kessel einer Dampfkraftwerksanlage oder dem Abhitzedampferzeuger einer Gas- und Dampfturbinen-Kraftwerksanlage entnommen wird. Da durch den deutlich effizienteren Betrieb der Kohlendioxid-Abscheidevorrichtung eine Einsparung dieses Dampfes erreicht wird, erhöht sich der Wirkungsgrad des Dampfturbinen- bzw. Dampfkraftwerksprozesses.

Das Verfahren zum Abtrennen von Kohlendioxid aus einem Abgas einer fossilbefeuerten Kraftwerksanlage durch Entnahme eines Seitenstroms aus teilregeneriertem Absorptionsmedium von dem Desorptionsprozess und Zuführung in den Absorptionsprozess ermöglicht somit einen wesentlichen effizienteren Betrieb durch einen erhöhten Gesamtwirkungsgrad der Kraftwerksanlage. Dies wird dadurch erreicht, dass Energie zum Betrieb des Desorptionsprozesses eingespart wird, da nur ein Teil des beladenen Absorptionsmediums weitgehend regeneriert wird. Die Erfindung ermöglicht zudem die nachträgliche Installation einer Kohlendioxid-Abscheidevorrichtung unter Erfüllung ökonomischer Bedingungen.

In einer vorteilhaften Ausgestaltung bei dem Absorptionsprozess bei wenigstens einer ersten Prozess-Stufe kohlendioxidhaltiges Abgas mit einem Absorptionsmedium in Kontakt gebracht, wobei ein teilbeladenes Absorptionsmedium und ein von Kohlendioxid teilweise befreites Abgas gebildet wird. Das teilbeladene Absorptionsmedium wird mit dem teilregenerierten Absorptionsmedium aus dem Desorptionsprozess zusammengeführt, wobei ein gemischtes Absorptionsmedium entsteht, und wobei Kohlendioxid von dem gemischten Absorptionsmedium aufgenommen wird, wobei ein beladenes Absorptionsmedium und ein gereinigtes Abgas gebildet wird, das von Kohlendioxid weitgehend befreit ist.

Bei dem Desorptionsprozess wird in einer ersten Prozess-Stufe von dem beladenen Absorptionsmedium Kohlendioxid abgegeben, wobei ein Gas-Dampfgemisch aus gasförmigem Kohlendioxid und dampfförmigem Absorptionsmedium gebildet wird. Außerdem entsteht das bereits beschriebene teilregenerierte Absorptionsmedium. Das Gas-Dampfgemisch wird auch als Brüden bezeichnet. In einer vorteilhaften Weiterbildung wird bei dem Desorptionsprozess in einer zweiten Prozess-Stufe von dem teilregenerieten Absorptionsmedium Kohlendioxid abgegeben, wobei ein regeneriertes Absorptionsmedium und ein Gas- Dampfgemisch aus gasförmigem Kohlendioxid und dampfförmigem Absorptionsmedium gebildet wird.

Es ist von Vorteil, wenn von dem Desorptionsprozess bei mehreren Prozess-Stufen teilregeneriertes Absorptionsmedium mit unterschiedlichen Konzentrationen an Kohlendixid entnommen wird, und in den Absorptionsprozess zurückgeführt wird. Das teilregenerierte Absorptionsmedium aus den unterschiedlichen Prozess-Stufen des Desorptionsprozesses wird zusammengeführt und in den Absorptionsprozess zurückgeführt, wobei durch die Zusammenführung von teilregeneriertem Absorptionsmedium mit unterschiedlicher Konzentration an Kohlendioxid die Konzentration an Kohlendioxid des zurückgeführten teilregenerierten Absorptionsmediums eingestellt wird. Dies ist insbesondere bei nicht konstanten Prozessparametern und beim Anfahren des Kohlendioxid-Abtrennungsprozesses von Vorteil. Auf das Zusammenführen kann auch verzichtet werden. Dann wird dem Absorptionsprozess das teilregenerierten Absorptionsmediums auf unterschiedlichen Stufen zugeführt.

In einer weiteren Ausgestaltung des Kohlendioxid-Abtrennungsverfahrens wird teilregeneriertes Absorptionsmedium aus wenigstens einer Prozess-Stufe des Desorptionsprozesses entnommen, teilbeladenes Absorptionsmedium aus wenigstens einer Prozess-Stufe des Absorptionsprozesses entnommen, und zusammengeführt. Dabei wird ein gemischtes Absorptionsmedium gebildet. Die Konzentration an Kohlendioxid des gemischten Absorptionsmediums wird durch das Zufuhrverhältnis zwischen teilregeneriertem Absorptionsmediums und teilbeladenem Absorptionsmedium eingestellt.

Vorteilhafterweise wird das teilregenerierte Absorptionsmedium dem Absorptionsprozess bei einer Stufe zugeführt, an welcher die Konzentration an Kohlendioxid des teilgereinigten Absorptionsmediums gleich oder geringer ist als die Konzentration des teilbeladenen Absorptionsmediums. Dadurch kann sich das teilregenerierte Absorptionsmedium mit dem teilbeladenen Absorptionsmedium vermischen und im Absorptionsprozess weiter Kohlendioxid aus dem Abgas aufnehmen.

Zweckmäßigerweise wird bei dem Kohlendioxid-Abtrennungsverfahren in dem Desorptionsprozess von dem beladenen Absorptionsmedium gasförmiges Kohlendioxid thermisch ausgetrieben. Dies ermöglicht die Nutzung von Wärme, die in dem Gesamtprozess der Kraftwerksanlage auf günstige Weise entnommen werden kann. Vorzugsweise wird thermische Energie durch Dampf bereit gestellt, der z.B. aus dem Kessel einer Dampfkraftwerkesanlage oder dem Abhitzedampferzeuger einer Gas- und Dampfturbinen-Kraftwerksanlage entnommen wird.

Von Vorteil ist die Verwendung eines Fluid als Absorptionsmedium. Gegenüber einem Festkörpermedium bietet ein Fluid in dem erfindungsgemäßen Verfahren erhebliche Vorteile bei der Durchleitung des Mediums in den Prozess. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen. Ein besonders guter Prozessdurchlauf wird durch eine Lösung aus H2O und Aminderivaten als Lösungsmittel erzielt. Bekannt sind beispielsweise Lösungen unter den Namen MEA (Mono-Ethanolamin) und MDEA (Methyldiethanolamin).

In einer vorteilhaften Ausgestaltung des Kohlendioxid-Abtrennungsverfahrens wird dem Desorptionsprozess Wärmeenergie durch Dampf zugeführt, wobei der Dampf in einem Wärmetauscherprozess mit dem beladenen Absorptionsmedium im Wärmetausch geführt wird. Von Vorteil ist dabei die Verwendung eines Dampfes mit einer Temperatur von nicht weniger als 120°C. Der Dampf kann z.B. aus dem Kessel eines Dampfkraftwerksanlagenprozesses oder aus dem Dampfkreislauf eines Gas- und Dampfturbinenkraftwerksprozesses entnommen werden.

Bei einer vorteilhaften Weiterbildung wird bei wenigstes einem ersten Vorwärmprozess Wärme von dem teilregenerierten Absorptionsmedium entzogen, und an das beladene Absorptionsmedium abgegeben. Dadurch wird eine Abkühlung des teilregenerierten Absorptionsmediums erzielt und gleichermaßen eine Vorwärmung des beladenen Absorptionsmediums. Ebenso vorteilhaft wird bei einem zweiten Vorwärmprozess Wärme von dem regenerierten Absorptionsmedium entzogen, und an das beladene Absorptionsmedium abgegeben. Dies führt zu einer Abkühlung des regenerierten Absorptionsmediums und erzielt eine Vorwärmung des beladenen Absorptionsmediums. Durch den ersten und den zweiten Vorwärmprozess wird zusätzliche Energie für Abkühlung und Erwärmung eingespart. Die Vorwärmprozesse sind mit einem Wärmetauscherprozess vergleichbar.

In einer vorteilhaften Ausgestaltung des Kohlendioxid-Abtrennungsverfahrens wird das teilregenerierte Absorptionsmedium über einen Pumpprozess in den Absorptionsprozess zurückgeführt. Durch den Pumpprozess wird Absorptionsmedium gefördert. Die Fördermenge kann dabei durch einen Regelprozess gesteuert werden.

Bei einer vorteilhaften Weiterbildung des Kohlendioxid-Abtrennungsverfahrens wird das aus dem Abgas abgetrennte Kohlendioxid in einem Komprimierungsprozess komprimiert. Das dabei entstehende komprimierte Kohlendioxid wird anschließend gespeichert.

Vorteilhafterweise kommt das beschriebene Kohlendioxid-Abtrennungsverfahren bei einem fossilbefeuerten Dampfkraftwerk oder bei einer kombinierten Gas- und Dampfturbinen-Kraftwerksanlage zur Anwendung. Die Implementierung des beschriebenen Kohlendioxid-Abtrennungsverfahrens in andere fossilbefeuerte Kraftwerksprozesse ist dann ebenso sinnvoll, wenn das Kohlendioxid-Abtrennungsverfahren vorhandene Energie des Kraftwerksprozesses nutzen kann.

Die auf eine fossilbefeuerte Kraftwerksanlage gerichtete Aufgabe der Erfindung wird gelöst durch eine fossilbefeuerte Kraftwerksanlage mit einer einer Verbrennungsvorrichtung nachgeschalteten und von einem kohlendioxidhaltigen Abgas durchströmbaren Abscheidevorrichtung für Kohlendioxid, wobei die Abscheidevorrichtung eine Absorptionsvorrichtung zur Aufnahme von Kohlendioxid aus dem kohlendioxidhaltigen Abgas und eine Desorptionsvorrichtung zur Abgabe des aufgenommenen Kohlendioxids umfasst, und wobei die Desorptionsvorrichtung wenigstens eine Anzapfstelle für die Entnahme eines Teilstroms eines teilregenerierten Absorptionsmediums aufweist, und die Absorptionsvorrichtung wenigstens eine Einleitstelle für die Einleitung eines teilregenerierten Absorptionsmediums aufweist, wobei die Anzapfstelle mit der Einleitstelle über eine Leitung verbunden ist.

Dabei geht die auf eine fossilbefeuerte Kraftwerksanlage gerichtete Erfindung von der Überlegung aus, dass eine Leitung die Desorptionsvorrichtung mit der Absorptionsvorrichtung verbindet, durch welche ein teilregeneriertes Absorptionsmedium von der Desorptionsvorrichtung in die Absorptionsvorrichtung leitbar ist. Die Leitung kann dabei ausgestaltet sein wie übrige fluidführende Leitungen, durch welche z.B. beladenes Absorptiosmedium von der Absorptionsvorrichtung in die Desorptionsvorrichtung oder regeneriertes Absorptionsmedium von der Desorptionsvorrichtung in die Absorptionsvorrichtung leitbar ist.

Seitens der Desorptionsvorrichtung ist die Leitung verbunden mit einer Anzapfstelle. Die Anzapfstelle ermöglicht eine Seitenstromentnahme des Stroms an teilregenerierten Absorptionsmedium aus der Desorptionsvorrichtung. Seitens der Absorptionsvorrichtung ist die Leitung mit der Einleitstelle verbunden. Durch die Einleitstelle ist das teilregenerierte Absorptionsmedium an geeigneter Stelle in die Absorptionsvorrichtung einleitbar. Anzapfstelle und Einleitstelle können als Ventil ausgestaltet sein.

Die Energie zum Abgeben von Kohlendioxid aus einem mit Kohlendioxid beladenen Absorptionsmedium wird in der Regel durch Heißdampf bereit gestellt, der z.B. aus dem Kessel einer Dampfkraftwerksanlage oder dem Abhitzedampferzeuger einer Gas- und Dampfturbinenkraftwerksanlage entnommen wird. Da durch den deutlich effizienteren Betrieb der Kohlendioxid-Abscheidevorrichtung eine Einsparung des Heißdampfes erreicht wird, erhöht sich der Gesamtwirkungsgrad der fossilbefeuerten Kraftwerksanlage.

Die Erfindung einer fossilbefeuerten Kraftwerksanlage mit einer Leitung zur Rückführung eines teilregenerierten Absorptionsmediums von dem Desorptionsprozess in den Absorptionsprozess ermöglicht somit einen wesentlich effizienteren Betrieb der Gesamtkraftwerksanlage. Dies ist dadurch möglich, dass weniger teilregeneriertes Absorptionsmedium endregeneriert, also weitgehend von Kohlendioxid befeit werden muss. Dadurch ist die Desorptionsvorrichtung entlastet, und im Energieverbrauch reduziert. Die Erfindung ermöglicht zudem die nachträgliche Installation einer Kohlendioxid-Abscheidevorrichtung unter Erfüllung ökonomischer Bedingungen.

In einer vorteilhaften Weiterbildung der fossilbefeuerten Kraftwerksanlage weist die Desorptionsvorrichtung mehrere Anzapfstellen auf, so dass mehrere Teilströme eines teilregenerierten Absorptionsmediums in die Absorptionsvorrichtung zuführbar sind. In die Leitung ist jeweils eine Pumpvorrichtung geschaltet, so dass im Betrieb Absorptionsmedium förderbar ist.

Die Anzapfstellen sind in einer weiteren vorteilhaften Ausgestaltung der fossilbefeuerten Kraftwerksanlage jeweils über eine Leitung zuleitend mit einer Regelvorrichtung verbunden. Ableitend ist die Regelvorrichtung über wenigstens eine Leitung mit der Absorptionsvorrichtung verbunden, so dass über die Regelvorrichtung die Konzentration an Kohlendioxid des in die Absorptionsvorrichtung zurückgeführten teilregenerierten Absorptionsmediums einstellbar ist.

Zweckmäßigerweise ist durch die Desorptionsvorrichtung Kohlendioxid aus einem Absorptionsmedium thermisch austreibbar. Dies gestattet die Verwendung von Wärme, die in der Kraftwerksanlage auf günstige Weise verfügbar ist.

In einer bevorzugten Ausgestaltung der fossilbefeuerten Kraftwerksanlage ist die Absorptionsvorrichtung als eine entlang einer vertikalen Achse ausgerichteten Säule ausgestaltet. Die Säule weist im oberen Bereich einen Einlass und im unteren Bereich einen Auslass auf. Im Betrieb ist dadurch regeneriertes Absorptionsmedium im oberen Bereich einführbar, und beladenes Absorptionsmedium im unteren Bereich ausleitbar. Durch die Absorptionsvorrichtung ist ebenso ein kohlendioxidhaltiges Abgas leitbar, so dass eine Durchströmung nach dem Gegenstromprinzip von kohlendioxidhaltigem Abgas und Absorptionsmedium bewirkt ist. Die beschriebene Säule kann auch als Kolonne ausgestaltet sein. Solche Säulen sind in der chemischen Industrie auch als Kolonnen bekannt und dienen dazu, Stoffgemische durch thermische Verfahren zu trennen. Dies erfolgt unter Ausnutzung von Gleichgewichtszuständen zwischen unterschiedlichen Phasen. Die Einleitstelle zur Einleitung des teilregenerierten Absorptionsmediums ist dabei vorteilhaft an einer vertikalen Position zwischen dem Einlass und dem Auslass der Absorptionsvorrichtung angeordnet.

Bei einer ebenso bevorzugten Ausgestaltung der fossilbefeuerten Kraftwerksanlage ist die Desorptionsvorrichtung als eine entlang einer vertikalen Achse ausgerichteten Säule ausgestaltet. Die Säule weist dabei im oberen Bereich einen Einlass und im unteren Bereich einen Auslass auf. Im Betrieb ist somit beladenes Absorptionsmedium im oberen Bereich einführbar und im unteren Bereich ein regeneriertes Absorptionsmedium ausleitbar, wodurch eine Durchströmung der Desorptionsvorrichtung mit beladenem Absorptionsmediums bewirkt ist. Die beschriebene Säule kann auch als Kolonne ausgestaltet sein. Die Anzapfstelle zur Entnahme des teilregenerierten Absorptionsmediums ist dabei vorteilhaft an einer vertikalen Position zwischen dem Einlass und dem Auslass der Desorptionsvorrichtung angeordnet.

Bei einer besonderen Ausgestaltung der fossilbefeuerten Kraftwerksanlage ist bei der Absorptionsvorrichtung die vertikale Position der Einleitstelle bestimmt durch die Konzentration an Kohlendioxid des im Betrieb durchleitbaren teilregenerierten Absorptionsmediums, sowie durch die Konzentration an Kohlendioxid des teilbeladenen Absorptionsmediums der Absorptionsvorrichtung. Demnach ist die Einleitstelle an einer Stufe der Absorptionsvorrichtung angeordnet, an der die Konzentration an Kohlendioxid des teilregenierten Absorptionsmediums gleich oder geringer ist als die Konzentration an Kohlendioxid des teilbeladenen Absorptionsmediums in der Absorptionsvorrichtung.

In einer vorteilhaften Weiterbildung der fossilbefeuerten Kraftwerksanlage ist ein Vorwärmer sekundär zuleitend mit dem Auslass der Absorptionsvorrichtung und sekundär ableitend mit dem Einlass der Desorptionsvorrichtung verbunden. Im Betrieb ist so eine Vorwärmung für das beladene Absorptionsmedium bewirkt. Primär zuleitend ist der Vorwärmer mit dem Auslass der ersten Desorptionsvorrichtung und primär ableitend mit dem Einlass der Absorptionsvorrichtung verbunden. Dies bewirkt eine Abkühlung für das regenerierte Absorptionsmedium. Dabei ist die primäre Seite die Energie abgebende Seite und die sekundäre Seite die Energie aufnehmende Seite. Die Funktionsweise des Vorwärmers entspricht dabei der eines Wärmetauschers. Durch die Verwendung eines Vorwärmers kann im System freiwerdende Wärmeenergie wieder dem System zugeführt werden.

Zweckmäßigerweise ist die fossilbefeuerte Kraftwerksanlage derart ausgestaltet, dass die Abscheidevorrichtung mit einem für die Aufnahme von Kohlendioxid geeigneten Absorptionsmedium, insbesondere einem Waschmittel für Kohlendioxid, betreibbar ist. Dafür sind zusätzlich entsprechende Tanks für reines und beladenes Absorptionsmedium, Rohrleitungen, Ventile und Mess-, Kontroll- und Steuerelemente vorgesehen. Als Absorptionsmedium wird vorzugsweise ein Fluid verwendet. Gegenüber einem Feststoff bietet ein Fluid einen erheblichen Vorteil bei der Durchleitung. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen. Besonders vorteilhaft ist die Verwendung aus einer Lösung aus H₂O und Aminderivaten als Waschmittel. Bekannt sind beispielsweise Lösungen unter den Namen MEA (Mono-Ethanolamin) und MDEA (Methyldiethanolamin).

In einer bevorzugten Ausgestaltung ist die fossilbefeuerte Kraftwerksanlage eine Dampfkraftwerksanlage, welches einen befeuerten Kessel und eine Dampfturbine umfasst. In einer weiteren bevorzugten Ausgestaltung ist die fossilbefeuerte Kraftwerksanlage eine Gas- und Dampfturbinenkraftwerksanlage, welche eine Gasturbine und einen der Gasturbine abgasseitig nachgeschalteten Abhitzedampferzeuger umfasst, der in den Wasser-Dampf-Kreislauf einer Dampfturbine geschaltet ist. Die Implementierung der beschriebenen Abscheidevorrichtung in andere fossilbefeuerte Kraftwerke ist dann ebenso sinnvoll, wenn die Abscheidevorrichtung vorhandene Energie des Kraftwerks nutzen kann.

In einer Weiterbildung der fossilbefeuerte Kraftwerksanlage ist die Desorptionsvorrichtung über eine Anzapfleitung mit der Dampfturbine verbunden, so dass die Desorptionsvorrichtung durch Wärmeenergie aus dem Dampf betreibbar ist. Die Anzapfleitung ist eine Leitung, welche die Desorptionsvorrichtung mit einer Dampfquelle verbindet. Die Dampfquelle ist vorzugsweise die Dampfturbine der fossilbefeuerten Kraftwerksanlage. Die Entnahme des Dampfes kann direkt am Dampfturbinengehäuse oder an der Überströmleitung zwischen dem Hoch- und Niederdruckteil der Dampfturbine erfolgen.

Weitere Vorteile der fossilbefeuerten Kraftwerksanlage ergeben sich in analoger Weise aus den entsprechenden Weiterbildungen des voranbeschriebenen Kohlendioxid-Abtrennungsverfahrens.

Nachfolgend werden Ausführungsbeispiele der Erfindung anhand der beigefügten schematischen Zeichnungen näher erläutert. Es zeigt:
- FIG 1: ein Ausführungsbeispiel eines Kohlendioxid-Abtrennungsverfahrens einer fossilbefeuerten Kraftwerksanlage.
- FIG 2: ein Ausführungsbeispiel einer Dampfkraftwerksanlage als fossilbefeuerten Kraftwerksanlage mit Kohlendioxid-Abscheidevorrichtung.
- FIG 3: ein Ausführungsbeispiel einer Gas- und Dampfturbinenkraftwerksanlage als fossilbefeuerten Kraftwerksanlage mit einer Kohlendioxid-Abscheidevorrichtung.
- FIG 4: ein Ausführungsbeispiel einer Kohlendioxid-Abscheidevorrichtung.

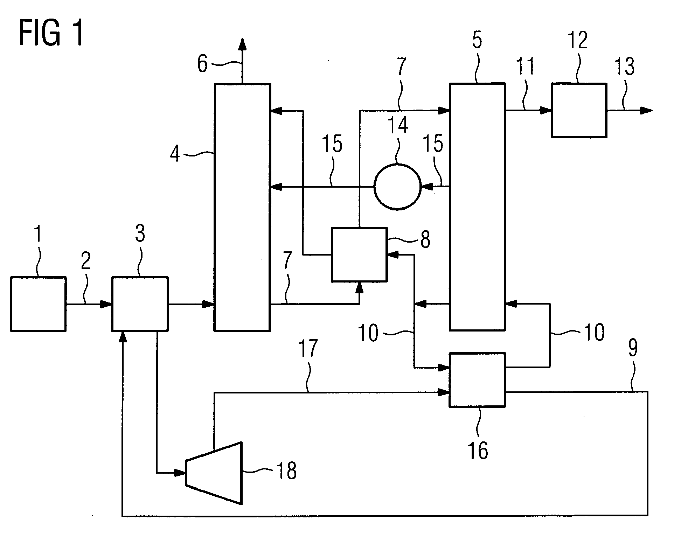

Die in FIG 1 dargestellte Ausführungsform des Kohlendioxid-Abtrennungsverfahren zeigt im Wesentlichen einen Verbrennungsprozess 1, einen Absorptionsprozess 4 und einen Desorptionsprozess 5.

Ein in dem Verbrennungsprozess 1 entstehendes kohlendioxidhaltiges Abgas 2 wird über einen Dampferzeugungsprozess 3 dem Absorptionsprozess 4 zugeführt. In dem Absorptionsprozess 4 wird Kohlendioxid aus dem kohlendioxidhaltigen Abgas 2 durch ein Absorptionsmedium aufgenommen. Den Absorptionsprozess 4 verlassen ein beladenes Absorptionsmedium 7 sowie ein gereinigtes Abgas 6.

Das beladene Absorptionsmedium 7 wird in einem dem Absorptionsprozess 4 nachgeschalteten Vorwärmprozess 8 erwärmt. Anschließend wird das beladene Absorptionsmedium 7 in den Desorptionsprozess 5 geführt, wo es in mehreren Teilregenerierungsschritten regeneriert wird.

Nach einem Teilregenerierungsschritt wird dem Desorptionsprozess 5 ein Teil des bis dahin teilregenerierten Absorptionsmediums 15 entnommen, und über einen Pumpprozess 14 zurück in den Absorptionsprozess geleitet. Der Pumpprozess 14 fördert das teilregenerierte Absorptionsmedium 15.

Nach der weitgehend vollständigen Regenerierung des Absorptionsmediums im Desorptionsprozess wird ein regeneriertes Absorptionsmedium 10 und abgetrenntes Kohlendioxid 11 gebildet. Das abgetrennte Kohlendioxid 11 wird nachfolgend einem Verdichtungsprozess 12 zugeführt. Das in dem Verdichtungsprozess 12 komprimierte Kohlendioxid 13 kann nun einer weiteren Verwendung oder Lagerung zugeführt werden.

Das den Desorptionsprozess verlassende regenerierte Absorptionsmedium 10 wird einem Wärmetauscherprozess 16 und dem Vorwärmprozess 8 zugeführt. In dem Vorwärmprozess 8 wird Wärme von dem regenerierten Absorptionsmedium 10 entzogen und an das beladene Absorptionsmedium 7 abgegeben. Das den Vorwärmprozess 8 verlassende regenerierte Absorptionsmedium 10 wird in den Absorptionsprozess 4 geleitet, in dem es erneut zur Absorption von Kohlendioxid bereitgestellt wird.

Dem Wärmetauscherprozess 16 wird ein Dampf 17 aus einem Dampfentspannungsprozess 18 zugeleitet. In dem Wärmetauscherprozess 16 wird Wärme von dem Dampf 17 an das regenerierte Absorptionsmedium 10 abgegeben, welches wieder dem Desorptionsprozess zur Verfügung gestellt wird. Den Wärmetauscherprozess 16 verlässt ein Kondensat 9 welches in den Dampferzeugungsprozess 3 geführt wird.

Der Dampferzeugungsprozess 3 ist zuleitend verbunden mit dem Verbrennungsprozess 1, aus dem ein heißes, kohlendioxidhaltiges Abgas 2 zugeführt wird. Der in dem Dampferzeugungsprozess 3 erzeugte Dampf wird dem Dampfentspannungsprozess 18 zugeführt.

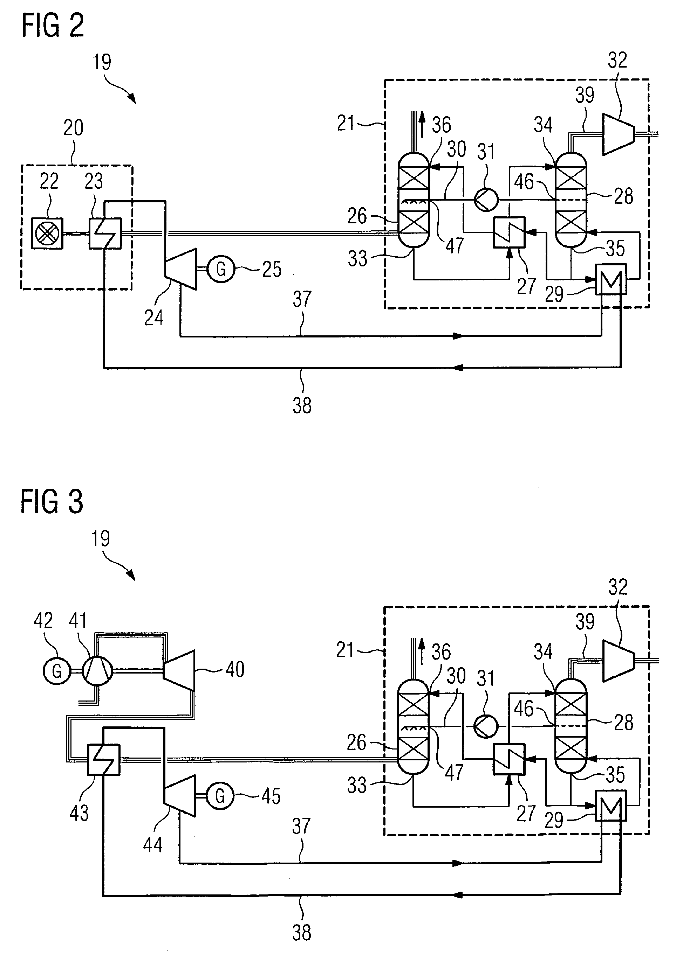

Die in FIG 2 dargestellte, beispielhafte Ausführungsform einer fossilbefeuerten Kraftwerksanlage 19 zeigt eine Dampfkraftwerksanlage mit Abscheidevorrichtung für Kohlendioxid. Diese umfasst im Wesentlichen eine Verbrennungs- und Dampferzeugungsvorrichtung 20 und eine der Verbrennungs- und Dampferzeugungsvorrichtung 20 nachgeschalteten Abscheidevorrichtung 21 für Kohlendioxid.

Die gezeigte Verbrennungs- und Dampferzeugungsvorrichtung 20 besteht aus einer Brennkammer 22 und einem befeuerten Kessel 23. Die Verbrennungs- und Dampferzeugungsvorrichtung 20 ist abgasleitend mit der Abscheidevorrichtung 21 verbunden. Der befeuerte Kessel 23 ist mit einer Dampfturbine 24 verbunden, durch welche ein Generator 25 antreibbar ist. Ferner ist der befeuerte Kessel 23 rauchgasleitend mit der Abscheidevorrichtung 21 verbunden. Nicht gezeigt sind hier weitere Rauchgasreinigungs-vorrichtungen, sowie Rauchgaskühlung und Gebläse.

Die Abscheidevorrichtung 21 besteht aus einer Absorptionsvorrichtung 26, einem Vorwärmer 27, einer Desorptionsvorrichtung 28, einem Wärmetauscher 29, einer Leitung 30, einer Pumpe 31 und einem Verdichter 32. Der Auslass 33 der Absorptionsvorrichtung 26 ist primär zuleitend für ein Absorptionsmedium mit dem Vorwärmer 27 verbunden. Primär ableitend ist der Vorwärmer 27 mit dem Einlass 34 der Desorptionsvorrichtung 28 verbunden.

Die Leitung 30 verbindet die Desorptionsvorrichtung 28 mit der Absorptionsvorrichtung 26. In die Leitung 30 ist die Pumpe 31 geschaltet, mit welcher im Betrieb der Abscheidevorrichtung 21 ein Teil des teilregeneriertes Absorptionsmedium aus der Desorptionsvorrichtung 28 entnommen wird und der Absorptionsvorrichtung 26 zuführbar ist.

Der Auslass 35 der Desorptionsvorrichtung 28 ist verbunden mit dem Wärmetauscher 29 und mit dem Vorwärmer 27. Mit dem Wärmetauscher ist der Auslass 35 sekundär zuleitend verbunden. Mit dem Vorwärmer 27 ist der Auslass 35 sekundär zuleitend verbunden. Sekundär ableitend ist der Vorwärmer 27 mit dem Einlass 36 der Absorptionsvorrichtung 26 verbunden. Optional kann zwischen Vorwärmer 27 und Einlass 36 ein hier nicht dargestellter Wärmetauscher zum Einsatz kommen.

Der Wärmetauscher 29 ist primärseitig in einen Dampfkreislauf geschaltet. Darin ist er primär zuleitend über eine Dampfleitung 37 mit einer Anzapfstelle der Dampfturbine 24 und primär ableitend über eine Rückführleitung 38 mit dem befeuerten Kessel 23 verbunden. Nicht gezeigt ist hier eine Dampfturbine, bestehend aus einem Hoch- und Niederdruckteil, die eine Überströmleitung zwischen Hoch- und Niederdruckteil aufweist, wobei die Überströmleitung mit der Dampfleitung 37 primär zuleitend mit dem Wärmetauscher 29 verbunden ist.

Die Desorptionsvorrichtung 28 ist über eine Leitung 39 für ein Gas-Dampfgemisch mit dem Verdichter 32 verbunden. Nicht gezeigt sind Pumpen, durch welche das Absorptionsmedium den einzelnen Vorrichtungen zugeführt wird.

Die in FIG 3 dargestellte fossilbefeuerte Kraftwerksanlage 19 zeigt eine Gas- und Dampfturbinenkraftwerksanlage mit Abscheidevorrichtung 21 für Kohlendioxid. Der Abscheidevorrichtung 21 vorgeschaltet sind eine Gasturbine 40, welche über eine Welle mit Luftverdichter 41 und einem Generator 42 verbunden ist, ein Abhitzedampferzeuger 43, der durch die Gasturbine 40 befeuert ist und für die Dampferzeugung bereitgestellt ist, sowie eine Dampfturbine 44, die über eine Welle mit einem Generator 45 verbunden ist und die mit einer Dampfleitung mit dem Abhitzedampferzeuger 43 verbunden ist.

Die nachgeschaltete Abscheidevorrichtung 21 ist im Wesentlichen analog ausgestaltet wie in FIG 2 bei dem Dampfkraftwerk.

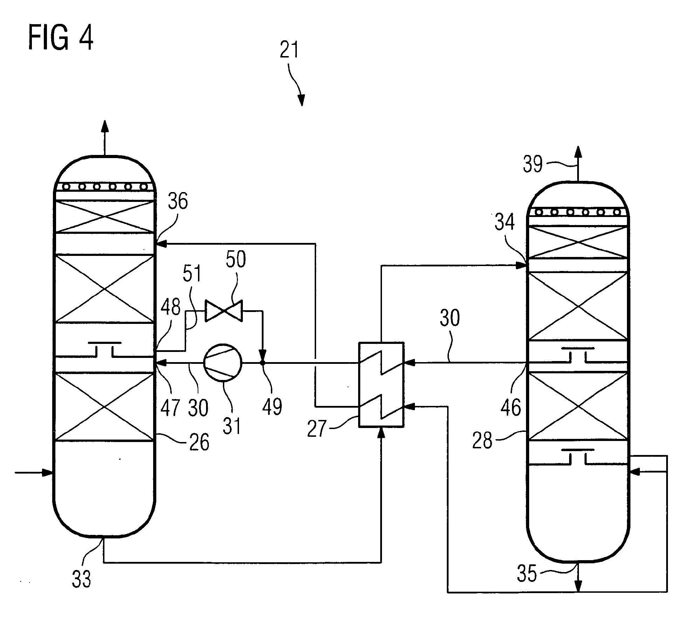

FIG 4 zeigt eine Weiterbildung einer bereits voran beschriebenen Abscheidevorrichtung 21 für Kohlendioxid. Dargestellt ist eine Absorptionsvorrichtung 26, ein Vorwärmer 27, eine Desorptionsvorrichtung 28, eine Leitung 30, eine Leitung 51, eine Regelvorrichtung 51 und eine Pumpe 31.

Der Auslass 33 der Absorptionsvorrichtung 26 ist primär zuleitend für ein Absorptionsmedium mit dem Vorwärmer 27 verbunden. Primär ableitend ist der Vorwärmer 27 mit dem Einlass 34 der Desorptionsvorrichtung 28 verbunden. Sekundär zuleitend ist der Vorwärmer 27 einerseits verbunden mit dem Auslass 35 und mit der Anzapfung 48. Sekundär ableitend ist der Vorwärmer 27 einerseits verbunden mit dem Einlass 36 und mit der Einleitstelle 47.

Eine Leitung 30 verbindet die Desorptionsvorrichtung 28 der Absorptionsvorrichtung 26. Die Anzapfstelle 48 der Absorptionsvorrichtung 26 ist über eine Leitung 51 an einer Zusammenführung 49 zuleitend mit der Leitung 30 verbunden. In die Leitung 30 ist die Pumpe 31 geschaltet, mit welcher im Betrieb der Abscheidevorrichtung 21 ein Teil des teilregeneriertes Absorptionsmedium der Absorptionsvorrichtung 26 zuführbar ist. Die Pumpe 30 ist hier nach der Zusammenführung 49 in die Leitung 30 geschaltet. Nicht gezeigt ist hier die Anordnung der Pumpe 31 vor der Zusammenführung 49. In die Leitung 51 ist eine Regelvorrichtung 50 geschaltet.

Mit der Erfindung ist der Betrieb eines im Kohlendioxidausstoß reduzierten Kraftwerks mit hoher Effizienz möglich. Durch die Entnahme von teilbeladenem Absorptionsmedium wird der Desorptionsprozess entlastet, wodurch Energie zum Betreiben des Desorptionsprozesses eingespart wird. Die Vorrichtung zum Abtrennen von Kohlendioxid aus einem kohlendioxidhaltigen Abgas ist Bestandteil der fossilbefeuerten Kraftwerksanlage. Durch die schaltungstechnische Verbesserung ist eine wesentliche Effizienzsteigerung gegenüber einer herkömmlichen Gasreinigungseinrichtung einer fossilbefeuerten Kraftwerksanlage erzielbar.

## Patentansprüche

1. Verfahren zum Abtrennen von Kohlendioxid aus einem Abgas einer fossilbefeuerten Kraftwerksanlage, bei dem
a) in einem Verbrennungsprozess (1) ein fossiler Brennstoff verbrannt wird, wobei ein kohlendioxidhaltiges Abgas (2) erzeugt wird,
b) in einem Absorptionsprozess (4) kohlendioxidhaltiges Abgas (2) mit einem Absorptionsmedium in Kontakt gebracht wird, wobei Kohlendioxid von dem Absorptionsmedium aufgenommen wird,
c) in einem Desorptionsprozess (5) bei wenigstens einer ersten Prozess-Stufe von dem beladenen Absorptionsmedium (7) Kohlendioxid (11) abgegeben wird, wobei ein teilregeneriertes Absorptionsmedium (15) gebildet wird,
d) in dem Desorptionsprozess (5) bei wenigstens der ersten Stufe teilregeneriertes Absorptionsmedium (15) entnommen und in den Absorptionsprozess (4) zurückgeführt wird.

2. Verfahren nach Anspruch 1, bei dem in dem Absorptionsprozess (4) bei wenigstens einer ersten Prozess-Stufe kohlendioxidhaltiges Abgas (2) mit einem Absorptionsmedium in Kontakt gebracht wird, wobei ein teilbeladenes Absorptionsmedium und ein von Kohlendioxid teilweise befreites Abgas gebildet wird.

3. Verfahren nach Anspruch 2, bei dem in dem Absorptionsprozess teilregeneriertes Absorptionsmedium (15) mit teilbeladenem Absorptionsmedium zusammengeführt wird, wobei ein gemischtes Absorptionsmedium entsteht, und wobei Kohlendioxid von dem gemischten Absorptionsmedium aufgenommen wird, wobei ein beladenes Absorptionsmedium (7) und ein gereinigtes Abgas (6) gebildet wird, das von Kohlendioxid weitgehend befreit ist.

4. Verfahren nach Anspruch 2, bei dem teilregeneriertes Absorptionsmedium (15) aus wenigstens einer Prozess-Stufe des Desorptionsprozesses (5) entnommen wird, und bei dem teilbeladenes Absorptionsmedium aus wenigstens einer Prozess-Stufe des Absorptionsprozesses entnommen wird, wobei das teilregeneriertes Absorptionsmedium (15) mit dem teilbeladenen Absorptionsmedium zusammengeführt wird, wobei ein gemischtes Absorptionsmedium gebildet wird, und wobei die Konzentration an Kohlendioxid des gemischten Absorptionsmediums durch das Zufuhrverhältnis zwischen teilregeneriertem Absorptionsmediums (15) und teilbeladenem Absorptionsmedium eingestellt wird.

5. Verfahren nach einem der Ansprüche 1 bis 4, bei dem in dem Desorptionsprozess (5) von dem beladenen Absorptionsmedium (7) Kohlendioxid abgegeben wird, wobei ein Gas-Dampfgemisch (11) aus gasförmigem Kohlendioxid und dampfförmigem Absorptionsmedium gebildet wird.

6. Verfahren nach einem der Ansprüche 1 bis 5, bei dem in dem Desorptionsprozess (5) in einer zweiten Prozess-Stufe von dem teilregenerieten Absorptionsmedium Kohlendioxid abgegeben wird, wobei ein regeneriertes Absorptionsmedium (10) und ein Gas- Dampfgemisch (11) aus gasförmigem Kohlendioxid und dampfförmigem Absorptionsmedium gebildet wird.

7. Verfahren nach einem der Ansprüche 1 bis 6, bei dem von dem Desorptionsprozess (5) bei mehreren Prozess-Stufen teilregeneriertes Absorptionsmedium (15) mit unterschiedlichen Konzentrationen an Kohlendioxid entnommen wird, und in den Absorptionsprozess (4) zurückgeführt wird.

8. Verfahren nach Anspruch 7, bei dem teilregeneriertes Absorptionsmedium (15) aus mehreren Prozess-Stufen des Desorptionsprozesses (5) zusammengeführt und in den Absorptionsprozess (4) zurückgeführt wird, wobei durch die Zusammenführung von teilregeneriertem Absorptionsmedium mit unterschiedlicher Konzentration an Kohlendioxid die Konzentration an Kohlendioxid des zurückgeführten teilregenerierten Absorptionsmediums (15) eingestellt wird.

9. Verfahren nach einem der Ansprüche 1 bis 8, bei dem das teilregenerierte Absorptionsmedium (15) dem Absorptionsprozess (4) bei einer Stufe zugeführt wird, an welcher die Konzentration an Kohlendioxid des teilgereinigten Absorptionsmediums (15) gleich oder geringer ist als die Konzentration des teilbeladenen Absorptionsmediums.

10. Verfahren nach einem der Ansprüche 1 bis 9, bei dem in dem ersten Desorptionsprozess (5) Kohlendioxid thermisch ausgetrieben wird.

11. Verfahren nach einem der Ansprüche 1 bis 10, wobei ein Fluid als Absorptionsmedium verwendet wird.

12. Verfahren nach Anspruch 11, wobei eine Flüssigkeit, ein Gas, ein Aerosol oder eine Suspension als Fluid verwendet wird.

13. Verfahren nach Anspruch 12 wobei ein verdampfbares Lösungsmittel als Flüssigkeit verwendet wird.

14. Verfahren nach Anspruch 13, wobei eine Lösung aus H₂O und Aminderivaten als Lösungsmittel verwendet wird.

15. Verfahren nach einem der Ansprüche 1 bis 14, bei welchem dem Desorptionsprozess (5) Wärmeenergie durch Dampf (17) zugeführt wird, wobei der Dampf (17) in einem Wärmetauscherprozess (16) mit dem Absorptionsmedium im Wärmetausch geführt wird.

16. Verfahren nach einem der Ansprüche 1 bis 15, bei dem in wenigstes einem ersten Vorwärmprozess Wärme von dem teilregenerierten Absorptionsmedium (15) entzogen wird, und an das beladene Absorptionsmedium (7) abgegeben wird.

17. Verfahren nach einem der Ansprüche 1 bis 16, bei dem in einem zweiten Vorwärmprozess (8) Wärme von dem regenerierten Absorptionsmedium (10) entzogen wird, und an das beladene Absorptionsmedium (7) abgegeben wird.

18. Verfahren nach einem der Ansprüche 1 bis 17, bei dem das teilregenerierte Absorptionsmedium (15) über einen Pumpprozess (14) dem Absorptionsprozess zurückgeführt wird.

19. Verfahren nach einem der Ansprüche 1 bis 18, bei dem das abgetrennte Kohlendioxid (11) in einem Komprimierungsprozess (12) komprimiert wird, wobei ein komprimiertes oder verflüssigtes Kohlendioxid (13) entsteht.

20. Verfahren nach Anspruch 19, bei dem das komprimierte oder verflüssigte Kohlendioxid (13) gespeichert wird.

21. Verfahren nach einem der vorhergehenden Ansprüche, **gekennzeichnet durch** eine Anwendung bei einem fossilbefeuerten Dampfkraftwerk.

22. Verfahren nach einem der Ansprüche 1 bis 20, **gekennzeichnet durch** eine Anwendung bei einer kombinierten Gas- und Dampfturbinen-Kraftwerksanlage.

23. Fossilbefeuerte Kraftwerksanlage (19) mit einer einer Verbrennungsvorrichtung (20) nachgeschalteten und von einem kohlendioxidhaltigen Abgas (2) durchströmbaren Abscheidevorrichtung (21) für Kohlendioxid, wobei die Abscheidevorrichtung (21) eine Absorptionsvorrichtung (26) zur Aufnahme von Kohlendioxid aus dem kohlendioxidhaltigen Abgas (2) und eine Desorptionsvorrichtung (28) zur Abgabe des aufgenommenen Kohlendioxids umfasst,
**dadurch gekennzeichnet, dass** die Desorptionsvorrichtung (28) wenigstens eine Anzapfstelle (46) für die Entnahme eines Teilstroms eines teilregenerierten Absorptionsmediums aufweist, und die Absorptionsvorrichtung (26) wenigstens eine Einleitstelle (47) für die Einleitung eines teilregenerierten Absorptionsmediums aufweist, wobei die Anzapfstelle (46) mit der Einleitstelle (47) über eine Leitung (30) verbunden ist.

24. Fossilbefeuerte Kraftwerksanlage (19) nach Anspruch 23, **dadurch gekennzeichnet, dass** die Desorptionsvorrichtung (28) mehreren Anzapfstellen (46) aufweist, so dass mehrere Teilströme eines teilregenerierten Absorptionsmediums in die Absorptionsvorrichtung zuführbar sind.

25. Fossilbefeuerte Kraftwerksanlage (19) nach Anspruch 24, **dadurch gekennzeichnet, dass** in die Leitung (30) eine Pumpvorrichtung (31) geschaltet ist, so dass im Betrieb Absorptionsmedium förderbar ist.

26. Fossilbefeuerte Kraftwerksanlage (19) nach einem der Ansprüche 23 bis 25, **dadurch gekennzeichnet, dass** die Anzapfstellen (46) jeweils über eine Leitung zuleitend mit einer Regelvorrichtung verbunden sind, und dass die Regelvorrichtung ableitend über wenigstens eine Leitung mit der Absorptionsvorrichtung (26) verbunden ist, so dass über die Regelvorrichtung die Konzentration an Kohlendioxid des in die Absorptionsvorrichtung (26) zurückgeführten teilregenerierten Absorptionsmediums einstellbar ist.

27. Fossilbefeuerte Kraftwerksanlage (19) nach einem der Ansprüche 23 bis 26, **dadurch gekennzeichnet, dass** Kohlendioxid aus dem Absorptionsmedium thermisch austreibbar ist.

28. Fossilbefeuerte Kraftwerksanlage (19) nach einem der Ansprüche 23 bis 27, **dadurch gekennzeichnet, dass** die Absorptionsvorrichtung (26) als eine entlang einer vertikalen Achse ausgerichteten Säule ausgestaltet ist, wobei die Säule im oberen Bereich einen Einlass (36) und im unteren Bereich einen Auslass (33) aufweist, so dass im Betrieb regeneriertes Absorptionsmedium im oberen Bereich einführbar ist, und beladenes Absorptionsmedium im unteren Bereich ausleitbar ist, und dass durch die Absorptionsvorrichtung (26) kohlendioxidhaltiges Abgas (2) leitbar ist, so dass eine Durchströmung nach dem Gegenstromprinzip von kohlendioxidhaltigem Abgas (2) und Absorptionsmedium bewirkt ist.

29. Fossilbefeuerter Kraftwerksanlage (19) nach Anspruch 28, **dadurch gekennzeichnet, dass** die Einleitstelle (47) an einer vertikalen Position zwischen dem Einlass (36) und dem Auslass (33) der Absorptionsvorrichtung (26) angeordnet ist.

30. Fossilbefeuerte Kraftwerksanlage (19) nach einem der Ansprüche 23 bis 29, **dadurch gekennzeichnet, dass** die Desorptionsvorrichtung (28) als eine entlang einer vertikalen Achse ausgerichteten Säule ausgestaltet ist, wobei die Säule im oberen Bereich einen Einlass (34) und im unteren Bereich einen Auslass (35) aufweist, so dass im Betrieb beladenes Absorptionsmedium im oberen Bereich einführbar und im unteren Bereich ein erstes regeneriertes Absorptionsmedium ausleitbar ist, so dass eine Durchströmung der Desorptionsvorrichtung mit beladenen Absorptionsmediums bewirkt ist.

31. Fossilbefeuerte Kraftwerksanlage (19) nach Anspruch 30, **dadurch gekennzeichnet, dass** die Anzapfstelle (46) an einer vertikalen Position zwischen dem Einlass (34) und dem Auslass (35) der Desorptionsvorrichtung (28) angeordnet ist.

32. Fossilbefeuerte Kraftwerksanlage (19) nach einem der Ansprüche 23 bis 31, **dadurch gekennzeichnet, dass** an der Absorptionsvorrichtung (26) die vertikale Position der Einleitstelle (47) durch die Konzentration an Kohlendioxid des im Betrieb durchleitbaren teilregenerierten Absorptionsmediums definiert ist, so dass die Konzentration an Kohlendioxid des teilregenierten Absorptionsmediums gleich oder geringer ist als die Konzentration an Kohlendioxid des teilbeladenen Absorptionsmediums in der Absorptionsvorrichtung (26).

33. Fossilbefeuerte Kraftwerksanlage (19) nach einem der Ansprüche 30 bis 32, **dadurch gekennzeichnet, dass** ein Vorwärmer (27) sekundär zuleitend mit dem Auslass (33) der Absorptionsvorrichtung (26) und sekundär ableitend mit dem Einlass (34) der Desorptionsvorrichtung (28) verbunden ist, so dass im Betrieb eine Vorwärmung für das beladene Absorptionsmedium bewirkt ist, und dass der Vorwärmer (27) primär zuleitend mit dem Auslass (35) der Desorptionsvorrichtung (28) und primär ableitend mit dem Einlass (36) der Absorptionsvorrichtung (26) verbunden ist, so dass eine Abkühlung für das regenerierte Absorptionsmedium bewirkt ist.

34. Fossilbefeuerte Kraftwerksanlage (19) nach einem der Ansprüche 23 bis 33, **dadurch gekennzeichnet, dass** die Abscheidevorrichtung (21) derart ausgestaltet ist, dass diese mit einem für die Aufnahme von Kohlendioxid geeigneten Absorptionsmedium, insbesondere einem Waschmittel für Kohlendioxid, betreibbar ist.

35. Fossilbefeuerte Kraftwerksanlage (19) nach Anspruch 34, **dadurch gekennzeichnet, dass** die Abscheidevorrichtung für den Betrieb mit einer Lösung aus H₂O und Aminderivaten als Absorptionsmedium ausgestaltet ist.

36. Fossilbefeuerte Kraftwerksanlage (19) nach einem der Ansprüche 23 bis 35, **gekennzeichnet durch** eine Ausgestaltung als Dampfkraftwerk, umfassend einen befeuerten Kessel (23) und eine Dampfturbine (24).

37. Fossilbefeuerte Kraftwerksanlage (19) nach einem der Ansprüche 23 bis 35, **gekennzeichnet durch** eine Ausgestaltung als Gas- und Dampfturbinenanlage, umfassend eine Gasturbine (40) und einen der Gasturbine (40) abgasseitig nachgeschalteten Abhitzedampferzeuger (43), der in den Wasser-Dampf-Kreislauf (37, 38) einer Dampfturbine (44) geschaltet ist.

38. Fossilbefeuerte Kraftwerksanlage (19) nach einem der Ansprüche 36 oder 37, **dadurch gekennzeichnet, dass** die Desorptionsvorrichtung (28) über eine Anzapfleitung (37) mit der Dampfturbine (44) verbunden ist, so dass die Desorptionsvorrichtung durch Wärmeenergie aus dem Dampf betreibbar ist.
